# EUROPÄISCHE PATENTSCHRIFT

(11) **EP 1 122 575 B1**
(45) Veröffentlichungstag und Bekanntmachung des Hinweises auf die Patenterteilung: **05.01.2011**
(21) Anmeldenummer: 01101475.0
(22) Anmeldetag: 24.01.2001
(51) Int. Cl.: G02B 21/26, G02B 21/00, G02B 7/00

(54) **Vorrichtung zum Positionieren eines optischen Bauteils in einem Strahlengang**
Device for positioning an optical element in a ray path
Appareil de positionnement d'un composant optique dans la trajectoire de faisceaux

(30) Priorität: 26.01.2000 DE 10003391; 15.01.2001 DE 10101711
(43) Veröffentlichungstag der Anmeldung: 08.08.2001
(73) Patentinhaber: Leica Microsystems CMS GmbH, 35578 Wetzlar (DE)
(72) Erfinder: Engelhardt, Johann, Dr., 76669 Schönborn (DE)
(74) Vertreter: Naumann, Ulrich

(56) Entgegenhaltungen:
- EP-A- 0 069 263
- DE-A- 2 055 944
- DE-A- 4 036 065
- US-A- 2 399 658
- US-A- 2 656 759
- US-A- 3 471 220
- US-A- 5 576 897
- US-A- 5 633 752
- SPINDLER & HOYER: PRODUKTKATALOG, Mai 1993 (1993-05), Seite c13 XP002259069
- SPINDLER & HOYER: PRODUKTKATALOG, Mai 1993 (1993-05), Seite c28 XP002259070

## Beschreibung

Die Erfindung betrifft eine Vorrichtung zum Positionieren eines optischen Bauteils im Strahlengang eines Mikroskops.

Vorrichtungen der gattungsbildenden Art sind hinlänglich aus der Praxis bekannt. Insoweit gibt es zahlreiche Anwendungen, bei denen es erforderlich ist, mehrere optische Elemente, so beispielsweise Spiegel oder Strahlteiler, ohne großen Aufwand gegeneinander auszutauschen. In der Praxis ist jedoch der damit verbundene Aufwand erheblich, da jedes eingesetzte optische Element erneut justiert werden muss.

Gattungsbildende Vorrichtungen sind als Revolver- oder Magazinfassungen bekannt, in denen mehrere optische Elemente, so beispielsweise Spiegel oder Strahlteiler, vorjustiert sind. Bei diesen bekannten Vorrichtungen ist es jedoch erforderlich, jedes optische Element - des Revolvers oder des Magazins - einzeln, d. h. für sich gesehen, in der jeweiligen Arbeitsposition zu justieren, zumal bereits geringste Winkelfehler bzw. Winkelungenauigkeiten zu Abbildungsfehlern führen. Außerdem ist ein Austausch des gesamten Revolvers oder der Magazinfassung bei hohen Anforderungen an die Reproduzierbarkeit der den Strahlengang betreffenden Situation nicht möglich. Aus diesem Grunde sind die gattungsbildenden Vorrichtungen, so beispielsweise Revolver oder Magazinfassungen, meist fest eingebaut, so dass lediglich einzelne optische Elemente mit dem Erfordernis einer stets aufwendigen Justage austauschbar sind.

Bei einer Anwendung in der Rastermikroskopie kommt es im Falle der dort verwendeten Strahlteiler ganz besonders darauf an, absolute Winkelgenauigkeiten von < 0,1 mrad zu erzielen, wobei die im Strahlengang befindlichen Strahlteiler während des Betriebs austauschbar sein sollten. Ein justagefreier Austausch einzelner optischer Elemente ist bislang nicht möglich. Ein Austausch des gesamten Revolvers ist denkbar, wobei danach jeder einzelne Strahlteiler erneut justiert werden muss. Dies ist aufgrund des enormen zeitlichen Aufwandes nicht akzeptabel und erfordert obendrein den Einsatz von Fachpersonal, wodurch sich die Betriebskosten erhöhen.

Aus JP-A-B114752 ist eine Vorrichtung zum Positionieren eines optischen Bauteils im Strahlengang eines Mikroskops bekannt. Die Vorrichtung umfasst eine im Strahlengang positionierte Platte in Form eines Schiebers, einen Führungsblock als Führungsteil und mehrere optische Bauteile, nämlich eine fotographische Maske sowie optische Elemente. Die optischen Bauteile sind in der als Magazin bzw. als Fassung ausgeführten Platte justiert angeordnet. Die Platte sitzt mit einer Führungsfläche in dem Führungsblock. Mehrere Strahldurchlässe sind vorgesehen. Der Führungsblock umfasst einen Durchgang für den Strahlengang, ein rechtwinklig ausgebildetes Führungsbett für die Platte und eine sich in Längsrichtung über die gesamte Länge erstreckende Ausnehmung zum ungehinderten Bewegen der in der Platte festgelegten optischen Bauteile. Die Platte ist im Führungsbett des Führungsblocks unter einem auf die Führungsfläche wirkenden Anpressdruck geführt.

EP-A-0069263 offenbart ebenfalls eine entsprechende Vorrichtung mit Platte, optischen Bauteilen, Führungsblock und Anpress-Vorrichtung.

Auch JP-A-8129126 zeigt eine entsprechende Vorrichtung mit Platte, optischen Bauteilen, Führungsblock und Anpress-Vorrichtung. Sowohl die Platte als auch die Ausnehmung des Führungsblocks sind kreisringförmig ausgebildet, nämlich zum ungehinderten Bewegen der in der Platte festgelegten optischen Bauteile.

Den bekannten Verrichtungen ist gemein, dass dort die Platte ausschließlich in Längsrichtung aus dem Führungsblock herausgezogen werden kann, nämlich aufgrund der Tatsache, dass die Platte vom Führungsblock umgriffen und dadurch gehalten und geführt ist. Dies erfordert einen ganz erheblichen Bauraum und ist in der Handhabung umständlich.

Der vorliegenden Erfindung liegt daher die Aufgabe zugrunde, eine Vorrichtung der Eingangs genannten Art derart auszugestalten und weiterzubilden, dass der Austausch optischer Elemente einfach, schnell und präzise möglich ist.

Die erfindungsgemäße Vorrichtung zum Positionieren eines optischen Bauteils in einem Strahlengang löst die voranstehende Aufgabe durch die Merkmale des Patentanspruchs 1, nämlich durch eine entsprechende Vorrichtung mit einer Platte und einem Führungsblock für die Platte, wobei mehrere optische Bauteile in einer Fassung justiert angeordnet sind, die als Magazin in Form der Platte im Strahlengang positionierbar ist, wobei die Platte mit einer Führungsfläche in dem Führungsblock sitzt und mehrere Strahldurchlässe aufweist, wobei der Führungsblock einen Durchgang für den Strahlengang, ein rechtwinklig ausgebildetes Führungsbett für die Platte und eine sich in Längsrichtung über die gesamte Länge erstreckende Ausnehmung zum ungehinderten Bewegen der in der Platte festgelegten optischen Bauteile oder eine kreisringförmige Ausnehmung zum ungehinderten Bewegen der in der Platte festgelegten optischen Bauteile aufweist, wobei die Platte im Führungsbett des Führungsblocks mit einem auf die Führungsfläche wirkenden Anpressdruck geführt ist und dadurch in der Führungsbahn gehalten ist und wobei die Platte von oben aus dem Führungsblockentnehmbar ist.

Erfindungsgemäß ist erkannt worden, dass man an der bislang realisierten Technik insoweit festhalten kann, als mehrere optische Bauteile - gleicher oder unterschiedlicher Gattung - in einer Fassung justiert angeordnet sind. Diese Fassung dient als Magazin und ist in einem im Strahlengang fest positionierten Führungsblock geführt. Der Führungsblock weist einen Durchgang für den Strahlengang auf, so dass sich der Strahlengang durch den Führungsblock hindurch erstreckt. Das Magazin lässt sich im Führungsblock bewegen, wodurch die dort angeordneten optischen Bauteile - jeweils für sich - positionsgenau und in der Fassung bzw. im Magazin justiert in den Strahlengang bringbar sind. Das Magazin ist gegenüber dem Führungsblock und somit gegenüber dem Strahlengang kalibriert bzw. justiert.

Nun ist es denkbar, das Magazin als lineares Bauteil auszuführen, so dass hierdurch eine einer herkömmlichen Magazinfassung vergleichbare Ausführungsform vorliegt, beispielsweise in der äußeren Form eines herkömmlichen Filterschiebers. Weiterhin ist es denkbar, das Magazin als ein im Wesentlich rotationssymmetrisches Bauteil auszuführen. Diese Ausführungsform wäre mit einer Revolverfassung vergleichbar, wobei zum Einbringen eines anderen, in dem Magazin angeordneten optischen Bauteils bzw. in den Strahlengang das rotationssymmetrische Bauteil gedreht bzw. rotiert wird.

Wie bereits gesagt, kann das Magazin entweder als lineares Bauteil oder als ein im Wesentlichen rotationssymmetrisches Bauteil ausgeführt sein. Demgemäß wird das als lineares Bauteil ausgeführte Magazin im Führungsblock linear verfahren, wohingegen das rotationssymmetrische Magazin vorzugsweise um seine Rotationsachse im Führungsblock gedreht bzw. rotiert wird.

Im Hinblick auf einen justierfreien Austausch der sich in der Fassung bzw. im Magazin befindliche optische Bauteile ist es von ganz besonderem Vorteil, wenn die optisch aktive Fläche des Bauteils in einer Ebene parallel zu der Führungsebene des Magazins liegt. Bei einmal justierten optischen Bauteilen und einer im Führungsblock justierten Fassung bzw. einem justierten Magazin ist eine Dejustage aufgrund der konkreten Anordnung bei Betrieb bzw. beim Verschieben des Magazins weitestgehend ausgeschlossen. Ebenso ist es denkbar, dass die optisch aktive Fläche des Bauteils, so beispielsweise eine Spiegelfläche oder die wirksame Fläche eines Prismas, zumindest weitgehend in der Führungsebene des Magazins liegt. Winkelungenauigkeiten sind insoweit wirksam vermieden, was letztendlich auf die Anordnung der optischen Bauteile in der Fassung bzw. im Magazin und die justierte bzw. kalibrierte Anordnung des Magazins im Führungsblock zurückzuführen ist.

In weiter vorteilhafter Weise ist das Magazin in dem Führungsblock kippfehlerfrei verschiebbar. Dazu lassen sich beliebige Maßnahmen realisieren, wobei ein einfacher Austausch des Magazins gewährleistet sein muss. Insoweit ist es auf jeden Fall möglich und auch erforderlich, das Magazin von oben aus dem Führungsblock entnehmen zu können.

Zur sicheren Führung des Magazins in dem Führungsblock ist es von Vorteil, wenn der Führungsschlitten quasi frei - beispielsweise linear - laufen kann, jedoch in seiner Laufrichtung - auf diese - festgelegt ist. Dazu wirkt auf das Magazin ein vorzugsweise konstanter Anpressdruck, der sich auch beim Verschieben des Magazins nicht oder nur unwesentlich verändert. Insoweit ist es von ganz besonderer Bedeutung, dass das Magazin zumindest weitgehend mit konstantem, auf die Führungsfläche wirkendem Anpressdruck bewegbar ist, um nämlich eine gleichmäßige Bewegung gewährleisten zu können.

Die Bewegung des Magazins, wodurch die jeweiligen optischen Bauteile in ihre dem Strahlengang zugeordnete Position verbringbar sind, kann im einfachsten Fall von Hand erfolgen. Ebenso ist es möglich, das Magazin durch einen präzise arbeitenden Motor anzutreiben bzw. durch einen Motor zu bewegen. Zur Feinstellung geeignete Elektromotoren lassen sich in beliebiger Ausführung verwenden.

Wie bereits zuvor erwähnt, dient das Magazin einerseits zur Aufnahme der optischen Bauteile und andererseits zum Bewegen im Führungsblock. Dazu könnte das Magazin rahmenähnlich ausgebildet sein. Ebenso ist es jedoch auch denkbar, das Magazin als Durchlässe aufweisende Platte auszuführen, wobei diese Platte zwei parallele Flächen - Oberseite und Unterseite - aufweisen kann. Die dem Führungsblock zugewandte Fläche dient dann der Führung. Mit anderen Worten liegt die Platte mit ihrer unteren Fläche auf einer entsprechenden Fläche des Führungsblocks auf.

Im Rahmen einer etwas aufwendigeren Ausgestaltung könnte die Platte des Magazins auf der dem Führungsblock zugewandten Seite einen in eine entsprechende Ausnehmung des Führungsblocks greifenden Führungsbereich zur Führung aufweisen. Aus dieser Konstruktion ergibt sich, dass gleich mehrere Flächen zur kippfehlerfreien Führung dienen, nämlich zum einen die unmittelbar auf dem Führungsblock zur Auflage kommende Unterseite und zum anderen seitliche Flächen, die in die Ausnehmung des Führungsblocks eingreifen. Beispielsweise lässt sich dadurch eine lineare Zwangsführung gewährleisten.

Die im Magazinschlitten ausgebildeten Strahldurchlässe sind vorzugsweise rund ausgeführt und erstrecken sich mit hinreichendem Durchmesser - entsprechend der Dimension des optischen Bauteils bzw. des optischen Strahlengangs - durch das Magazin insgesamt hindurch. Zumindest auf der dem optischen Bauteil abgewandten Seite könnten sich die so gebildeten Strahldurchlässe konisch erweitern, wodurch ein ungehindertes Einfallen des Strahls begünstigt ist. Eine entsprechend konische Ausgestaltung auf der anderen Seite des Magazins ist denkbar, wobei dort besondere Vorkehrungen zur Positionierung des optischen Bauteils erforderlich sind. Im Rahmen einer linearen Verschiebbarkeit des Magazins ist es von weiterem Vorteil, wenn die Strahldurchlässe entlang der Platte - in deren Längsachse - linear angeordnet sind, so dass die dort vorgesehenen optischen Bauteile durch einfache lineare Verschiebung des Magazinschlittens im Strahlengang positionierbar sind, und zwar ohne zusätzliche Justage. Bei einer rotationssymmetrischen Ausführung des Magazins könnten die Strahldurchlässe umfangsmäßig angeordnet sein, so dass durch einfache Drehung bzw. Rotation des Magazins die dort vorgesehen optischen Bauteile im Strahlengang positionierbar sind. Dabei könnte es von weiterem Vorteil sein, dass die Strahldurchlässe äquidistant zueinander angeordnet sind, so dass ein automatisches Verschieben und Positionieren des Magazins begünstigt ist.

Eingangs wurde bereits die Positionierung der optischen Bauteile angesprochen. Insoweit ist es von Vorteil, wenn diese mit ihrer aktiven Fläche in der Führungsebene oder parallel zu der Führungsebene des Magazins vorzugsweise konzentrisch zu den Strahldurchlässen angeordnet sind. Auch diese Anordnung begünstigt ein sicheres Positionieren der optischen Bauteile, nämlich ebenfalls ohne besonderen Justageaufwand.

Im Konkreten könnten die optischen Bauteile an der Führungsfläche des Magazins anliegen oder in die Strahldurchlässe des Magazins eingesetzt sein. Besondere Halter bzw. Aufnahmen sind denkbar, und zwar unter Berücksichtigung der Geometrie der jeweiligen optischen Bauteile.

Zum Festlegen der optischen Bauteile, insbesondere bei einfachem Anliegen an der Führungsfläche des Magazins, könnten diese durch dem Magazin zugeordnete Klammern in ihrer Position festgelegt sein. Bei entsprechend kalibrierten Anlageflächen erübrigt sich eine Justage, wobei es durchaus erforderlich sein kann, die optischen Bauteile bei erstmaliger Anordnung im Magazin zu justieren. Der forderliche Aufwand hängt von den jeweiligen Erfordernissen ab.

Bei dem Führungsblock handelt es sich um ein im Strahlengang fest angeordnetes Bauteil, welches als kubischer Metallblock mit entsprechenden Ausnehmungen und Führungseigenschaften ausgeführt sein kann. Im Konkreten könnte der Führungsblock ein vorzugsweise rechtwinklig ausgebildetes Führungsbett für den Führungsschlitten aufweisen, so dass ein positionsgenaues Führen des Magazins möglich ist.

Des Weiteren könnte der Führungsblock eine sich in Längsrichtung vorzugsweise über die gesamte Länge, insbesondere mittig, erstreckende Ausnehmung zum ungehinderten linearen Bewegen der am Magazin festgelegten optischen Bauteile aufweisen. Im Rahmen einer solchen Ausgestaltung könnten die optischen Bauteile unterhalb des Magazins - im Bereich der sich in Längsrichtung erstreckenden Ausnehmung - angeordnet sein, so dass eine ungewollte Dejustage aufgrund des dort vorgesehenen Freiraums wirksam vermieden ist.

Falls das Magazin im Wesentlichen rotationssymmetrisch ausgeführt ist, weist der Führungsblock eine kreisringförmige Ausnehmung zum ungehinderten Bewegen der am Magazin festgelegten optischen Bauteile auf.

Bereits einleitend wurde ausgeführt, dass das Magazin in dem Führungsblock - nunmehr auch in dessen Führungsbett - geführt sein kann. Durch eine geeignete Kraftbeaufschlagung wird das Magazin in der Führungsebene bzw. in der Führungsbahn gehalten, wobei die Kraftbeaufschlagung durch eine Feder erfolgen kann. Diese Feder wirkt vorzugsweise orthogonal zur Verschieberichtung des Magazins, wobei zwischen der Feder und dem Magazin eine die Bewegung des Magazins gestattende Kugel zum Abrollen auf der Oberfläche des Magazins vorgesehen ist Eine entsprechende Nut im Magazin könnte die Rollbewegung gestatten. Sonstige Methoden zur Druckbeaufschlagung und somit zur sicheren Positionierung des Magazins in bzw. auf dem Führungsblock sind denkbar.

An dieser Stelle sei noch einmal angemerkt, dass es sich bei den optischen Bauteilen um beliebige optische Bauteile handeln kann, die in einem optischen Strahlengang Verwendung finden. So kann es sich dabei beispielsweise um einen Spiegel oder um einen Strahlteiler handeln, die im Rahmen der konfokalen Rastermikroskopie stets Verwendung finden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht, geschnitten, ein erstes Ausfüh- rungsbeispiel einer erfindungsgemäßen Vorrichtung,
- Fig. 2: in einer Unteransicht den Gegenstand aus Fig. 1,
- Fig. 3: gestrichen-,
- Fig.4: gestrichen,
- Fig. 5: in einer schematischen Seitenansicht, geschnitten, ein weiteres Aus- führungsbeispiel einer erfindungsgemäßen Vorrichtung,
- Fig. 6: in einer schematischen Seitenansicht, geschnitten, ein weiteres Aus- führungsbeispiel einer erfindungsgemäßen Vorrichtung und
- Fig. 7: in einer Unteransicht den Gegenstand aus Fig. 6.

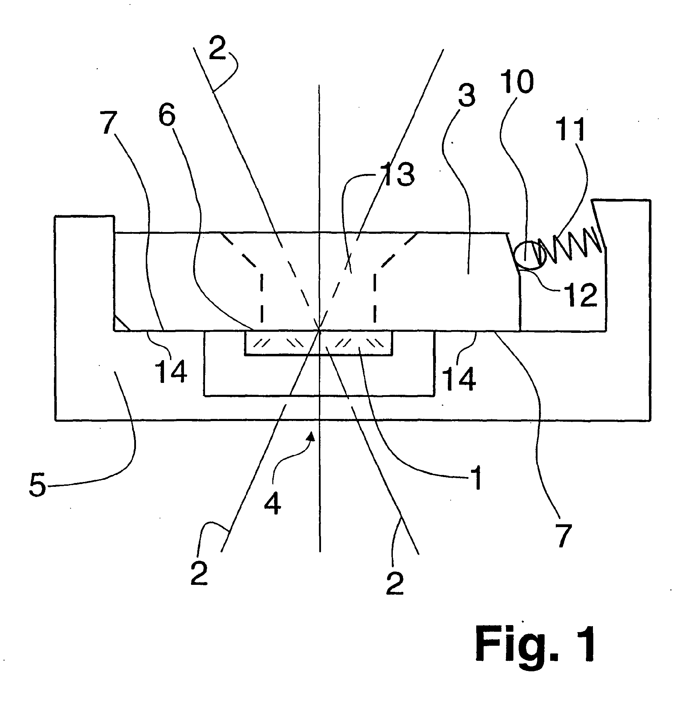

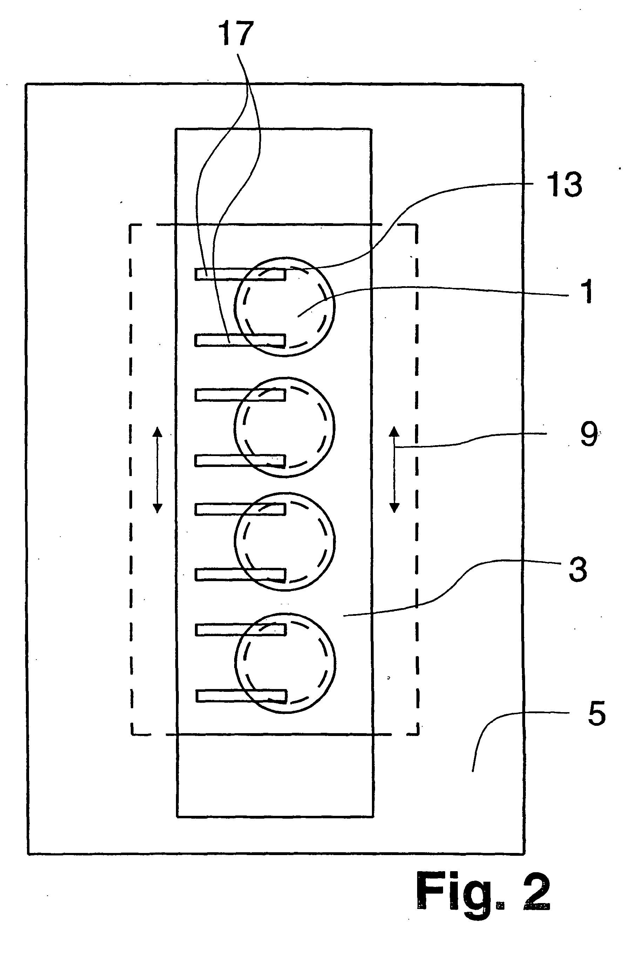

Fig. 1 zeigt ein erstes Ausführungsbeispiel einer erfindungsgemäßen Vorrichtung zum Positionieren eines optischen Bauteils 1, wobei es sich hier im Konkreten um einen Strahlteiler handelt. Das optische Bauteil 1 wird in dem symbolisch dargestellten Strahlengang 2 positioniert, wobei in einer Fassung 3 gleich mehrere optische Bauteile 1 justiert angeordnet sind. Diese Anordnung mehrerer optischer Bauteile 1 in der Fassung 3 lässt sich insbesondere Fig. 2 entnehmen.

Die Fassung 3 aus den Fig. 1 und 2 ist als Magazin ausgeführt, wobei das Magazin 3 in einem im Strahlengang 2 positionierten, einen Durchgang 4 für den Strahlengang 2 aufweisenden Führungsblock 5 geführt ist.

Das Magazin 3 aus den Fig. 1, 2 und 5 ist als lineares Bauteil ausgeführt.

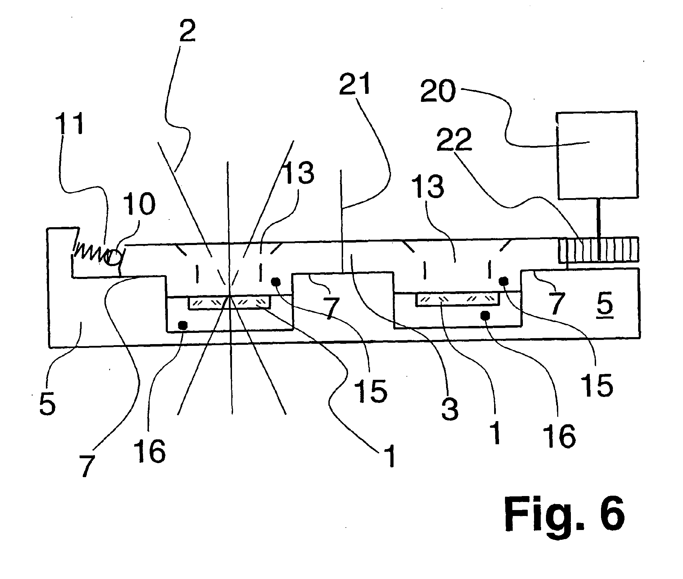

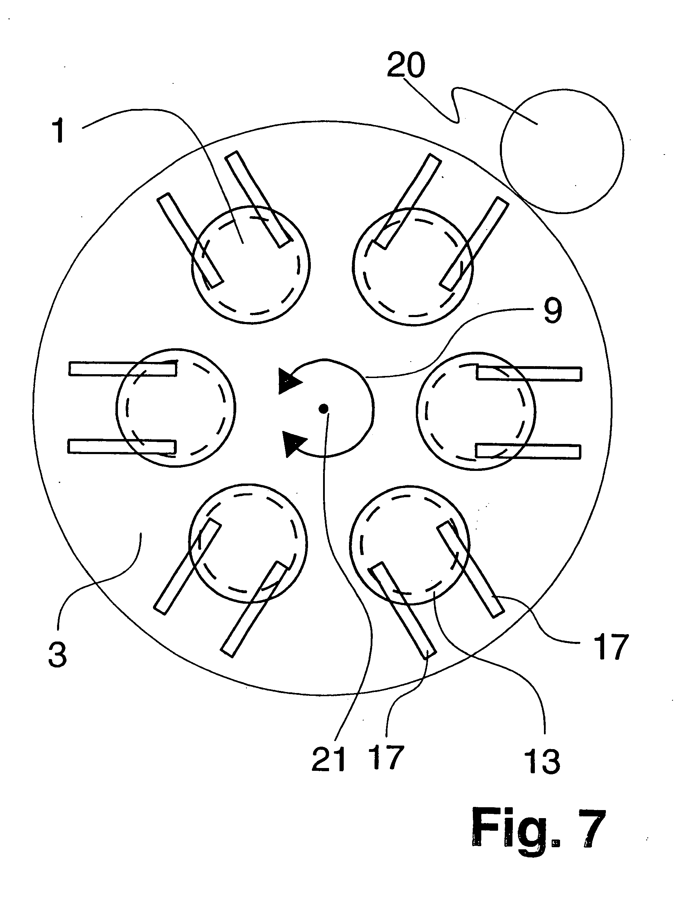

Das Magazin 3 aus den Fig. 6 und 7 ist in Form eines rotationssymmetrischen Bauteils, nämlich als Revolverfassung ausgeführt.

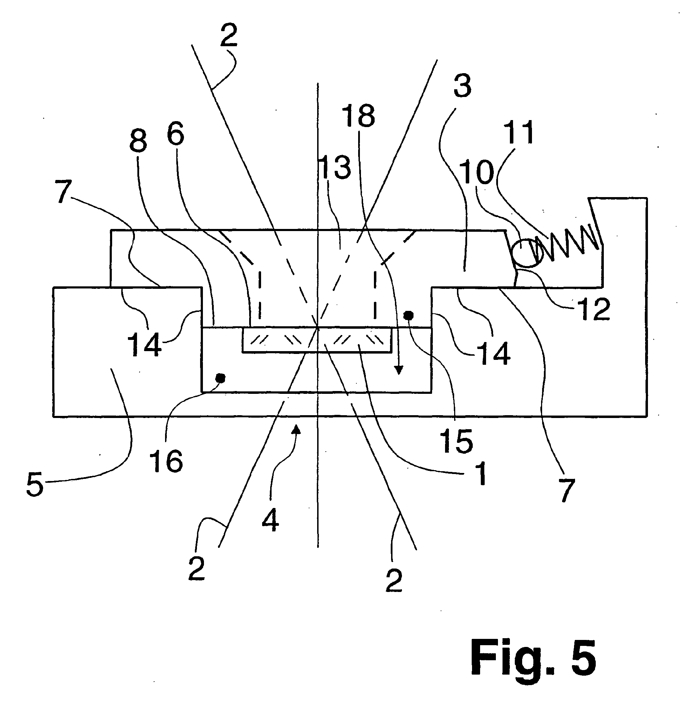

Bei dem in Fig. 1 gezeigten Ausführungsbeispiel ist die optisch aktive Fläche 6 des optischen Bauteils 1 exakt in der Führungsebene 7 des Magazins 3 angeordnet. Das in Fig. 5 gezeigte Ausführungsbeispiel der erfindungsgemäßen Vorrichtung unterscheidet sich gegenüber dem in Fig. 1 gezeigten Ausführungsbeispiel lediglich dadurch, dass die optisch aktive Fläche 6 des optischen Bauteils 1 gemäß Fig. 5 nicht in der Führungsebene 7 des Magazins 3 sondern in einer Ebene 8 angeordnet ist, die parallel zu der Führungsebene 7 des Magazins 3, jedoch dazu beabstandet liegt.

Die Fig. 1, 5 und 6 lassen andeutungsweise erkennen, dass das Magazin 3 in dem Führungsblock 5 kippfehlerfrei bewegbar ist. Die Bewegungsrichtung des Magazins 3 ist in den Fig. 2 und 7 mit Doppelpfeilen 9 gekennzeichnet.

Das Magazin 3 ist mit gleichbleibendem, auf die Führungsfläche bzw. Führungsebene 7 wirkendem Anpressdruck bewegbar, wobei dieser Anpressdruck durch eine ein abrollendes Kugelelement 10 umfassende Feder 11 bewerkstelligt ist. Das Kugelelement 10 rollt dabei auf einer geeigneten, schräg gestellten Abrollfläche 12 am Magazin 3 ab.

Bei den in den Fig. 1 bis 5 gezeigten Ausführungsbeispielen ist das Magazin 3 von Hand verschiebbar. Zur Durchführung einer motorangetriebenen Bewegung des Magazins 3 ist bei dem Ausführungsbeispiel aus den Fig. 6 und 7 ein Motorantrieb 20 vorgesehen.

Die Fig. 1, 2, 5 bis 7 zeigen gemeinsam, dass das Magazin 3 als Strahldurchlässe 13 aufweisende Platte ausgebildet ist. Bei dem in Fig. 1 gezeigten Ausführungsbeispiel umfasst die Platte zwei parallele Flächen, wobei die dem Führungsblock 5 zugewandte Fläche - Führungsfläche 14 - der eigentlichen Führung des Magazins 3 dient.

Bei dem in Fig. 5 gezeigten Ausführungsbeispiel ist das Magazin 3 bzw. die das Magazin 3 bildende Platte auf der dem Führungsblock 5 zugewandten Seite mit einem Führungsbereich 15 ausgestattet, der wiederum in eine entsprechende Ausnehmung 16 des Führungsblocks 5 greift. Eine korrekte lineare Führung ist dadurch gewährleistet; wobei die Ausnehmung 16 derart dimensioniert ausgeführt ist, dass eine Kollision mit den am Magazin 3 angeordneten optischen Bauteilen 1 ausgeschlossen ist. Demgemäß ist das Magazin 3 durch die dem Führungsblock 5 zugewandten Führungsflächen 7 bzw. 14 geführt.

Die Fig. 1, 2, 5 bis 7 lassen des Weiteren erkennen, dass sich die Strahldurchlässe 13 im Magazin 3 auf der dem optischen Bauteil 3 abgewandten Seite, d. h. in den Darstellungen oben, konisch erweitern. Der ungehinderte Strahleintritt ist damit begünstigt.

Fig. 2 zeigt besonders deutlich, dass die Strahldurchlässe 13 entlang dem Magazin 3 bzw. der dem Magazin 3 bildenden Platte entlang deren Längsachse linear angeordnet sind, und zwar äquidistant. Andere Anordnungen sind denkbar. Der Fig. 7 kann entnommen werden, dass die Strahldurchlässe 13 hier umfangsmäßig angeordnet sind, wobei hier sechs Strahldurchlässe 13 vorgesehen sind, die in einem äquidistanten Winkelabstand von 60° angeordnet sind.

Die optischen Bauteile 1 sind mit ihrer aktiven Fläche 6 in der Führungsebene 7 konzentrisch zu den Strahldurchlässen 13 angeordnet. Dabei liegen die optischen Bauteile 1 an der Führungsfläche 14 des Magazins 3 an, und zwar von unten an der dortigen Fläche. Ein Einsetzen der optischen Bauteile 1 in die Strahldurchlässe 13 ist möglich.

In den Fig. 2 und 7 ist des Weiteren angedeutet, dass die optischen Bauteile 1 durch dem Magazin 3 zugeordnete Klammern 17 in ihrer Position festgelegt sind. Je Bauteil 1 sind zwei Klammern 17 vorgesehen.

Des Weiteren sei hier noch einmal angemerkt, dass der Führungsblock 5 ein rechtwinklig ausgebildetes Führungsbett 18 aufweisen kann, nämlich gemäß Ausführungsbeispiel aus Fig. 5. Damit ist das Magazin 3 geführt.

Im Konkreten umfasst der Führungsblock 5 eine in Längsrichtung über die gesamte Länge des Führungsblocks 5 sich mittig erstreckende Ausnehmung 16, die zum ungehinderten linearen Bewegen des Magazins 3 unter Berücksichtigung der dort angeordneten optischen Bauteile 1 dient. Das Magazin 3 ist in dem Führungsblock 5 - in dessen Führungsbett 18 - linear geführt und wird dort kraftbeaufschlagt in der Führungsebene 7 gehalten. Auf die Kraftbeaufschlagung durch die Feder 11 und das Kugelelement 10 ist bereits voranstehend hingewiesen worden.

Der Fig. 6 ist entnehmbar, dass hier eine Ausnehmung 16 vorgesehen ist, die kreisringförmig ausgestaltet ist. In diese kreisringförmig ausgeführte Ausnehmung 16 greift der komplementär ausgestaltete Führungsbereich 15 des rotationssymmetrisch ausgestalteten Magazins 3 ein. Hierdurch ist das Magazin 3 in dem Führungsblock 5 geführt, so dass durch die kreisringförmige Ausnehmung 16 aus Fig. 6 eine exakte Drehbewegung des Magazins 3 um die Drehachse 21 möglich ist. Über das Zahnrad 22 wird die von dem Motor 20 erzeugte Drehbewegung unmittelbar auf das rotationssymmetrisch ausgestaltete Magazin 3 zu dessen Drehung übertragen.

Des Weiteren sei angemerkt, dass es sich bei den optischen Bauteilen 1 - im hier gewählten Fall - um Strahlteiler handelt. Sonstige optische Bauteile 1 für einen Strahlengang sind denkbar. Zusammenfassend sei im Lichte der voranstehenden Ausführungen folgendes angemerkt:

Die optischen Bauteile 1 können mit ihren optisch aktiven Flächen 6 unmittelbar auf dem Magazin 3 befestigt sein, wobei das Magazin 3 gleichzeitig mehrere optische Bauteile 1 umfassen kann. Dabei ist es unwesentlich, ob sämtliche Strahldurchlässe 13 aufweisenden "Plätze" auf dem Magazin 3 durch optische Bauteile 1 belegt sind. Der eine oder andere Strahldurchlass 13 kann durchaus auch unbelegt sein.

Die Fläche, auf der die optischen Bauteile 1 aufliegen, kann gleichzeitig die Führungsebene 7 bzw. Führungsfläche 14 für die Magazinbewegung sein. Das Magazin 3 wird dabei in dem Führungsblock 5 linear bewegt, wobei andersartige Bewegungen, insbesondere Drehbewegungen gemäß den Fig. 6 und 7 ebenfalls realisierbar sind.

Im Hinblick auf eine Justage ist lediglich die Referenzführungsebene relativ zum optischen Strahlengang 2 von Bedeutung und muss justiert werden. Die optischen Bauteile 1 sind - für sich gesehen - nicht zu justieren; sie müssen vielmehr lediglich am Magazin 3 befestigt werden, wobei eine einmalige Kalibrierung der für die Befestigung verantwortlichen Flächen und Teile denkbar ist.

Zwischen den optischen Bauteilen 1 und dem Magazin 3 befindet sich kein störendes Klebemittel oder dergleichen. Vielmehr werden die optischen Bauteile 1 unmittelbar auf das Magazin 3 aufgesetzt, so dass ein Kippfehler insoweit vermieden ist. Das Magazin 3 sitzt ebenfalls unmittelbar auf dem Führungsblock 5, so dass auch dort Kippfehler kaum auftreten können. Die Bewegung des Magazins 3 im Führungsblock 5 erfolgt schmiermittelfrei.

Durch eine geeignete Kraftbeaufschlagung des Magazins 3 wird ein Kippen des Magazins 3 im Führungsblock 5 wirksam vermieden. Der Anpressdruck des Magazins 3 auf die Führungsfläche 14 ist konstant, so dass auch insoweit ein Kippfehler vermieden ist.

Von ganz besonderer Bedeutung ist der erfindungsgemäße Vorteil, dass die optischen Bauteile 1 ohne Justieraufwand gegeneinander austauschbar sind, wobei ein kompletter Austausch des Magazins 3 gegen ein gleiches Magazin 3, möglicherweise mit anderen optischen Bauteilen 1 bestückt, möglich ist. Das Magazin 3 kann ohne Nachjustieren gegen ein Magazin 3 gleichen Typs ausgetauscht werden, wobei die dortige Vorkehrung unterschiedlicher optischer Bauteile 1 von untergeordneter Bedeutung ist.

Schließlich sei angemerkt, dass die voranstehend erörterten Ausführungsbeispiele zum Verständnis der beanspruchten Lehre beitragen, diese jedoch nicht auf die Ausführungsbeispiele einschränken.

## Patentansprüche

1. Vorrichtung zum Positionieren eines optischen Bauteils (1) im Strahlengang (2) eines Mikroskops, mit einer Platte (3) und einem Führungsblock (5) für die Platte (3), wobei mehrere optische Bauteile (1) in einer Fassung justiert angeordnet sind, die als Magazin in Form der Platte (3) im Strahlengang (2) positionierbar ist, wobei die Platte (3) mit einer Führungsfläche (14) in dem Führungsblock (5) sitzt und mehrere Strahldurchlässe (13) aufweist, wobei der Führungsblock (5) einen Durchgang (4) für den Strahlengang (2), ein rechtwinklig ausgebildetes Führungsbett (18) für die Platte (3) und eine sich in Längsrichtung über die gesamte Länge erstreckende Ausnehmung (16) zum ungehinderten Bewegen der in der Platte (3) festgelegten optischen Bauteile (1) oder eine kreisringförmige Ausnehmung (16) zum ungehinderten Bewegen der in der Platte (3) festgelegten optischen Bauteile (1) aufweist, wobei die Platte (3) im Führungsbett (18) des Führungsblocks (5) mit einem auf die Führungsfläche (14) wirkenden Anpressdruck geführt ist und **dadurch** in der Führungsbahn gehalten ist und wobei die Platte (3) von oben aus dem Führungsblock (5) entnehmbar ist.

2. Vorrichtung nach Anspruch 1, **dadurch gekennzeichnet, dass** das Magazin (3) als lineares Bauteil oder als ein im Wesentlichen rotationssymmetrisches Bauteil ausgeführt ist.

3. Vorrichtung nach Anspruch 1 oder 2, **dadurch gekennzeichnet, dass** die optisch aktive Fläche (6) des Bauteils (1) in einer Ebene (8) parallel zu der Führungsebene (7) des Magazins (3) oder zumindest weitgehend in der Führungsebene (7) des Magazins (3) liegt.

4. Vorrichtung nach einem der Ansprüche 1 bis 3, **dadurch gekennzeichnet, dass** das Magazin (3) in dem Führungsblock (5) kippfehlerfrei bewegbar ist.

5. Vorrichtung nach einem der Ansprüche 1 bis 4, **dadurch gekennzeichnet, dass** das Magazin (3) zumindest weitgehend mit dem gleichen auf die Führungsfläche (7, 14) wirkenden Anpressdruck bewegbar ist.

6. Vorrichtung nach einem der Ansprüche 1 bis 5, **dadurch gekennzeichnet, dass** das Magazin (3) von Hand oder durch einen Motor angetrieben bewegbar ist.

7. Vorrichtung nach einem der Ansprüche 1 bis 6, **dadurch gekennzeichnet, dass** das Magazin (3) als Platte mit zwei parallelen Flächen ausgeführt ist, wobei die dem Führungsblock (5) zugewandte Fläche (14) zur Führung dient oder dass die Platte auf der dem Führungsblock (5) zugewandten Seite einen in eine entsprechende Ausnehmung (16) des Führungsblocks (5) eingreifenden Führungsbereich (15) zur Führung aufweist, wobei mehrere Flächen zur kippfehlerfreien Führung dienen.

8. Vorrichtung nach einem der Ansprüche 1 bis 7, **dadurch gekennzeichnet, dass** die Strahldurchlässe (13) zumindest auf der dem optischen Bauteil (1) abgewandten Seite sich vorzugsweise konisch erweitern, wobei die Strahldurchlässe (13) entlang der Platte - in deren Längsachse - linear oder umfangsmäßig angeordnet sein können, wobei die Strahldurchlässe (13) vorzugsweise äquidistant zueinander angeordnet sind.

9. Vorrichtung nach einem der Ansprüche 1 bis 8, **dadurch gekennzeichnet, dass** die optischen Bauteile (1) mit ihrer aktiven Fläche (6) in der Führungsebene (7) oder parallel zur Führungsebene (7) vorzugsweise konzentrisch zu den Strahldurchlässen (13) angeordnet sind oder dass die optischen Bauteile (1) an der Führungsfläche (7, 14) des Magazins (3) anliegen, wobei die optischen Bauteile (1) in die Strahldurchlässe (13) eingesetzt sein können, wobei insbesondere die optischen Bauteile (1) durch dem Magazin (3) zugeordnete Klammern (17) in ihrer Position festgelegt sind.

10. Vorrichtung nach einem der Ansprüche 1 bis 9, **dadurch gekennzeichnet, dass** das Magazin (3) in dem Führungsblock (5) - in dessen Führungsbett (18) - geführt und vorzugsweise kraftbeaufschlagt in der Führungsebene (7) gehalten ist.

11. Vorrichtung nach einem der Ansprüche 1 bis 10, **dadurch gekennzeichnet, dass** das Magazin (3) in etwa orthogonal zu dessen Bewegungsrichtung vorzugsweise über eine Feder (11) kraftbeaufschlagt ist.

12. Vorrichtung nach einem der Ansprüche 1 bis 11, **dadurch gekennzeichnet, dass** es sich bei den optischen Bauteilen (1) um Strahlteiler und/oder um einen Spiegel handelt.

## Claims

1. A device for positioning an optical element (1) in the beam path (2) of a microscope, having a plate (3) and a guide block (5) for the plate (3), wherein a plurality of optical elements (1) are arranged aligned in a mount that is positionable in the beam path (2) as a magazine in the form of the plate (3), wherein the plate (3) is seated with a guide face (14) in the guide block (5) and comprises a plurality of beam passage openings (13), wherein the guide block (5) has a passage (4) for the beam path (2), a rectangular guide bed (18) for the plate (3) and a recess (16) extending in the longitudinal direction along the entire length for unimpeded movement of the optical elements (1) located in the plate (3) or a circular recess (16) for unimpeded movement of the optical elements (1) located in the plate (3), wherein the plate (3) is guided in the guide bed (18) of the guide block (5) by an applied pressure acting on the guide face (14) and is thereby retained in the guide path and wherein the plate (3) is removable from the guide block (5) from above.

2. A device according to claim 1, **characterised in that** the magazine (3) is in the form of a linear component or a substantially rotationally symmetrical component.

3. A device according to claim 1 or 2, **characterised in that** the optically active face (6) of the element (1) lies in plane (8) that is parallel to the guide plane (7) of the magazine (3) or at least largely in the guide plane (7) of the magazine (3).

4. A device according to any one of claims 1 to 3, **characterised in that** the magazine (3) is movable in the guide block (5) without tilting errors.

5. A device according to any one of claims 1 to 4, **characterised in that** the magazine (3) is movable at least largely with the same applied pressure acting on the guide face (7, 14).

6. A device according to any one of claims 1 to 5, **characterised in that** the magazine (3) is movable manually or is drivable by a motor.

7. A device according to any one of claims 1 to 6, **characterised in that** the magazine (3) is in the form of a plate having two parallel faces, wherein the face (14) facing towards the guide block (5) serves for guidance, or **in that** for guidance the plate has on the side facing towards the guide block (5) a guide region (15) engaging in a corresponding recess (16) of the guide block (5), wherein a plurality of faces serve for guidance without tilting errors.

8. A device according to any one of claims 1 to 7, **characterised in that** at least on the side remote from the optical element (1) the beam passage openings (13) widen preferably conically, wherein the beam passage openings (13) can be arranged linearly or peripherally along the plate - in the longitudinal direction thereof - the beam passage openings (13) being arranged preferably equidistant with respect to one another.

9. A device according to any one of claims 1 to 8, **characterised in that** the optical elements (1) are arranged with their active face (6) in the guide plane (7) or parallel to the guide plane (7) preferably concentrically with respect to the beam passage openings (13), or **in that** the optical elements (1) abut the guide face (7, 14) of the magazine (3), wherein the optical elements (1) can be inserted into the beam passage openings (13), wherein in particular the optical elements (1) are retained in their position by clips (17) associated with the magazine (3).

10. A device according to any one of claims I to 9, **characterised in that** the magazine (3) is guided in the guide block (5) - in the guide bed (18) thereof and is held in the guide plane (7) preferably through the application of force.

11. A device according to any one of claims 1 to 10, **characterised in that** the magazine (3) is subjected to the application of force, preferably by way of a spring (11), approximately orthogonally to the direction of movement of the magazine (3).

12. A device according to any one of claims 1 to 11, **characterised in that** the optical elements (1) comprise beam splitters and/or a mirror.

## Revendications

1. Dispositif pour positionner un composant optique (1) sur la trajectoire du faisceau (2) d'un microscope, comprenant une lame (3) et un bloc de guidage (5) pour la lame (3), dans lequel plusieurs composants optiques (1) sont disposés en alignement dans une monture pouvant être positionnée comme un chargeur sous la forme de la lame (3) sur la trajectoire du faisceau (2), dans lequel la lame (3) est posée avec une surface de guidage (14) dans le bloc de guidage (5) et présente plusieurs passages de faisceau (13), dans lequel le bloc de guidage (5) présente un passage (4) pour la trajectoire du faisceau (2), un berceau de guidage (18) réalisé perpendiculairement et destiné à la lame (3) et un évidement (16) s'étendant dans la direction longitudinale sur toute la longueur pour un déplacement libre des composants optiques (1) immobilisés sur la lame (3) ou un évidement (16) en forme de segment d'anneau de cercle pour le déplacement libre des composants optiques (1) immobilisés sur la lame (3), dans lequel la lame (3) est guidée dans le berceau de guidage (18) du bloc de guidage (5) avec une pression d'appui agissant sur la surface de guidage (14) et est ainsi maintenue dans la glissière de guidage, et dans lequel la lame (3) peut être retirée du bloc de guidage (5) par le haut.

2. Dispositif selon la revendication 1, **caractérisé en ce que** le chargeur (3) est réalisé comme un composant linéaire ou comme un composant substantiellement à symétrie de révolution.

3. Dispositif selon la revendication 1 ou 2, **caractérisé en ce que** la surface optiquement active (6) du composant (1) se situe dans un plan (8) parallèle au plan de guidage (7) du chargeur (3) ou du moins largement dans le plan de guidage (7) du chargeur (3).

4. Dispositif selon l'une quelconque des revendications 1 à 3, **caractérisé en ce que** le chargeur (3) peut être déplacé dans le bloc de guidage (5) sans erreur d'inclinaison.

5. Dispositif selon l'une quelconque des revendications 1 à 4, **caractérisé en ce que** le chargeur (3) est mobile au moins en grande partie avec la même pression d'appui agissant sur la surface de guidage (7, 14).

6. Dispositif selon l'une quelconque des revendications 1 à 5, **caractérisé en ce que** le chargeur (3) peut être déplacé par commande manuelle ou par un moteur.

7. Dispositif selon l'une quelconque des revendications 1 à 6, **caractérisé en ce que** le chargeur (3) est réalisé comme une lame avec deux surfaces parallèles, la surface (14) tournée vers le bloc de guidage (5) servant au guidage, ou **en ce que** la lame sur la face tournée vers le bloc de guidage (5) présente une zone de guidage (15) s'engageant dans un évidement correspondant (16) du bloc de guidage (5), plusieurs surfaces servant à un guidage sans erreur d'inclinaison.

8. Dispositif selon l'une quelconque des revendications 1 à 7, **caractérisé en ce que** les passages de faisceau (13), au moins sur le côté détourné du composant optique (1), s'élargissent de préférence de façon conique, les passages de faisceau (13) pouvant être disposés le long de la lame - sur son axe longitudinal - de façon linéaire ou circonférentielle, les passages de faisceau (13) étant de préférence disposés de façon équidistante les uns par rapport aux autres.

9. Dispositif selon l'une quelconque des revendications 1 à 8, **caractérisé en ce que** les composants optiques (1) sont disposés avec leur surface active (6) dans le plan de guidage (7) ou en parallèle au plan de guidage (7) de préférence de façon concentrique aux passages de faisceau (13), ou **en ce que** les composants optiques (1) s'appliquent contre la surface de guidage (7, 14) du chargeur (3), dans lequel les composants optiques (1) peuvent être insérés dans les passages de faisceau (13), dans lequel en particulier les composants optiques (1) sont tenus en position par des brides (17) attribuées au chargeur (3).

10. Dispositif selon l'une quelconque des revendications 1 à 9, **caractérisé en ce que** le chargeur (3) est guidé dans le bloc de guidage (5) - dans le berceau de guidage (18) de celui-ci - et de préférence maintenu dans le plan de guidage (7) sous l'effet d'une force.

11. Dispositif selon l'une quelconque des revendications 1 à 10, **caractérisé en ce que** le chargeur (3) est sollicité par une force, approximativement de façon orthogonale à sa direction de déplacement, par l'intermédiaire d'un ressort (11).

12. Dispositif selon l'une quelconque des revendications 1 à 11, **caractérisé en ce que** les composants optiques (1) correspondent à des séparateurs de faisceau et/ou à un miroir.
